# EUROPEAN PATENT APPLICATION

(11) **EP 4 300 518 A1**
(43) Date of publication of application: **03.01.2024**
(21) Application number: 22868419.7
(22) Date of filing: 24.05.2022
(51) Int. Cl.: H01B 7/32, H01B 7/17, H01B 9/02, H02H 3/14

(54) **POWER CABLE OF WHICH ELECTRICAL LEAKAGE CAN BE DETECTED BY LEAKAGE PROTECTOR**

(30) Priority: 17.05.2022 CN 202221185174 U
(71) Applicant: Zhongshan Kaper Electrical Co., Ltd, Zhongshan, Guangdong 528400 (CN)
(72) Inventor: ZOU, Bill, Zhongshan, Guangdong 528425 (CN); YU, Xingjin, Zhongshan, Guangdong 528425 (CN); ZUO, Li, Zhongshan, Guangdong 528425 (CN); ZHENG, Boyuan, Zhongshan, Guangdong 528425 (CN)
(74) Representative: Grünecker Patent- und Rechtsanwälte PartG mbB
(86) International application number: PCT/CN2022/094698
(87) International publication number: WO 2023/221151

(57) **Abstract**

The present invention discloses a power cord capable of being detected by a leakage protector when leakage occurs, comprising an outer coating layer, wherein a live wire, a neutral wire and a ground wire are provided in the outer coating layer; the live wire includes a live wire core, and a first insulation layer of the live wire, a shielding layer of the live wire and a second insulation layer of the live wire which are successively sheathed outside the live wire core; the neutral wire comprises a neutral wire core, and a first insulation layer of the neutral wire, a shielding layer of the neutral wire and a second insulation layer of the neutral wire which are successively outside the neutral wire core; and the ground wire comprises a ground wire core and an insulation layer of the ground wire sheathed outside the ground wire core. When the shielding layer of the live wire and the shielding layer of the neutral wire are broken, or the live wire and the shielding layer of the live wire are short-circuited, and the neutral wire and the shielding layer of the neutral wire are short-circuited, the leakage protector detects an abnormal signal of the power cord, and the leakage protector interrupts the electrical connection of the live neutral wire, so as to prevent fire from being short-circuited between the live wire core and the neutral wire core after the power cord is broken.

## Description

### Technical Field

The present invention relates to a power cord capable of being detected by a leakage protector when leakage occurs.

### Background Art

The existing power cord applied to the leakage protector includes an outer coating layer. A live wire, a neutral wire and a ground wire are provided in the outer coating layer. The live wire, the neutral wire and the ground wire are all composed of a wire core and an insulation layer. Therefore, when the live wire insulation layer and the neutral wire insulation layer are damaged, the live wire and the neutral wire are short-circuited. However, the leakage protector cannot interrupt power supply in a state where the live wire and the neutral wire are short-circuited. Thus, there is a situation where the live wire and the neutral wire are short-circuited and a fire occurs.

### Summary of the Invention

The invention overcomes the above-mentioned technical deficiencies and provides a power cord capable of being detected by a leakage protector when leakage occurs.

In order to achieve the purpose, the invention adopts the following technical solution.

A power cord capable of being detected by a leakage protector when leakage occurs is characterized by comprising an outer coating layer, wherein a live wire, a neutral wire and a ground wire are provided in the outer coating layer; the live wire includes a live wire core, and a first insulation layer of the live wire, a shielding layer of the live wire and a second insulation layer of the live wire which are successively sheathed outside the live wire core; the neutral wire comprises a neutral wire core, and a first insulation layer of the neutral wire, a shielding layer of the neutral wire and a second insulation layer of the neutral wire which are successively outside the neutral wire core; and the ground wire comprises a ground wire core and an insulation layer of the ground wire sheathed outside the ground wire core.

The power cord capable of being detected by a leakage protector when leakage occurs as described above is characterized in that the live wire core, the neutral wire core and the ground wire core are all copper conductor wire core.

The power cord capable of being detected by a leakage protector when leakage occurs as described above is characterized in that the shielding layer of the live wire and the shielding layer of the neutral wire are both metal mesh woven layers.

The power cord capable of being detected by a leakage protector when leakage occurs as described above is characterized in that the metal mesh woven layer is a copper mesh woven layer, a copper mesh aluminum foil woven layer or a copper aluminum mesh woven layer.

The power cord capable of being detected by a leakage protector when leakage occurs as described above is characterized in that the first insulation layer of the live wire, the second insulation layer of the live wire, the first insulation layer of the neutral wire, the second insulation layer of the neutral wire and the insulation layer of the ground wire are a polyvinyl chloride insulation layer, a polyethylene insulation layer or a cross-linked polyethylene insulation layer. The power cord capable of being detected by a leakage protector when leakage occurs as described above is characterized in that the outer coating layer is a polyvinyl chloride outer coating layer, a polyethylene outer coating layer or a poly perfluoro ethylene propylene outer coating.

The invention has the following beneficial effects.

According to the present invention, the shielding layer and the insulation layer are respectively sheathed outside the live wire and the neutral wire. When connected to the leakage protector, the live wire core, the shielding layer of the live wire, the neutral wire core and the shielding layer of the neutral wire are respectively connected to the leakage protector. When the shielding layer of the live wire and the shielding layer of the neutral wire are broken, or the live wire and the shielding layer of the live wire are short-circuited, and the neutral wire and the shielding layer of the neutral wire are short-circuited, the leakage protector detects an abnormal signal of the power cord, and the leakage protector interrupts the electrical connection of the live neutral wire, so as to prevent fire from being short-circuited between the live wire core and the neutral wire core after the power cord is broken.

### Brief Specification of the Drawings

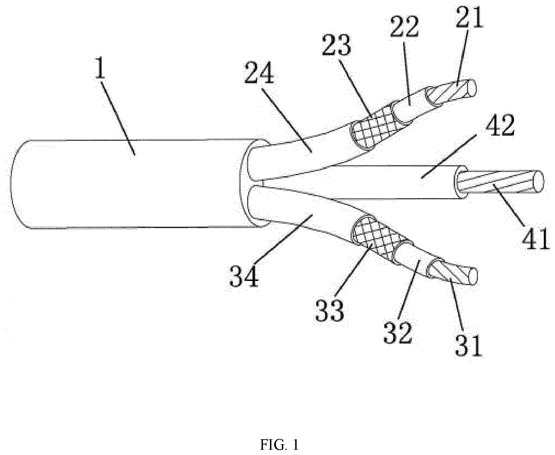

Fig. 1 is a structurally schematic view of the invention.

### Detailed Specification of the Invention

The technical solutions in the embodiments of the present invention will be clearly and completely described below with reference to the accompanying drawings.

It should be noted that all directionality indications (such as up, down, left, right, front, rear.) in the embodiments of the present invention are only used for explaining the relative positional relationship, movement condition and the like between each component under a certain posture (as shown in the drawings). If the certain posture changes, the directionality indication changes accordingly. If there is a description of "first", "second", etc. in an embodiment of the invention, the description of "first", "second", etc. is for descriptive purposes only and is not to be construed as indicating or implying relative importance or implicitly indicating the number of technical features indicated. Thus, a feature defined as "preferred" or "less preferred" may explicitly or implicitly include at least one such feature.

As shown in Fig. 1, a power wire capable of being detected by a leakage protector when leakage occurs includes an outer coating layer 1. A live wire, a neutral wire and a ground wire are provided in the outer coating layer 1. The live wire includes a live wire core 21, and a first insulation layer 22 of the live wire, a shielding layer 23 of the live wire and a second insulation layer 24 of the live wire which are successively sheathed outside the live wire core 21, so as to achieve the function of multiple protection of the live wire core 21. The neutral wire includes a neutral wire core 31, and a first insulation layer 32 of the neutral wire, a shielding layer 33 of the neutral wire and a second insulation layer 34 of the neutral wire which are successively sheathed outside the neutral wire core 31, so as to realize the function of multiple protection of the neutral wire core 31. The ground wire includes a ground wire core 41 and an insulation layer 42 of the ground wire sheathed outside the ground wire core 41.

When connected with the leakage protector, the live wire core 21, the shielding layer 23 of the live wire, the neutral wire core 31, the shielding layer 33 of the neutral wire and the earth wire core 41 are all connected with the leakage protector. The shielding layer 23 of the live wire and the shielding layer 33 of the neutral wire are respectively connected with the shielding wire short-circuit power-off component of the leakage protector.

When in use, when the first insulation layer 22 of the live wire is broken, the first insulation layer 32 of the neutral wire is broken, the shielding layer 23 of the live wire is cracked and the shielding layer 33 of the neutral wire is cracked, the electric leakage protector interrupts the electric connection, preventing the live wire core 21 and the neutral wire core 31 from short-circuiting to generate a fire.

As shown in Fig. 1, the live wire core 21, the neutral wire core 31 and the ground wire core 41 are all copper conductor wire cores. The copper conductor wire core has advantages of good conductivity, flexibility, ductility and low price.

As shown in Fig. 1, the shielding layer 23 of the live wire and the shielding layer 33 of the neutral wire are both metal mesh woven layers. The metal mesh woven layer is a copper mesh woven layer, a copper mesh aluminum foil woven layer or a copper aluminum mesh woven layer. The metal material of the metal mesh woven layer is selected according to practical requirements and service environments.

As shown in Fig. 1, the first insulation layer 22 of the live wire, the second insulation layer 24 of the live wire, the first insulation layer 32 of the neutral wire, the second insulation layer 34 of the neutral wire and the insulation layer 42 of the ground wire are a polyvinyl chloride insulation layer, a polyethylene insulation layer or a cross-linked polyethylene insulation layer. The material for manufacturing the insulation layer is selected according to practical requirements and service environments.

As shown in Fig. 1, the outer coating layer 1 is a polyvinyl chloride outer coating layer, a polyethylene outer coating layer or a poly perfluoro ethylene propylene outer coating layer. The manufacturing material of the outer coating layer is selected according to practical requirements and use environments.

The specification mentioned above is only the embodiments of the present invention and do not limit the patent scope of the present invention. Any equivalent transformations made using the content of the specification and drawings of the present invention, or the embodiments directly or indirectly applied in other related technical fields, under the invention conception of the invention, are also included in the scope of patent protection of the present invention.

## Claims

1. A power cord capable of being detected by leakage protector when leakage occurs, is **characterized by** comprising an outer coating layer (1), wherein a live wire, a neutral wire and a ground wire are provided in the outer coating layer (1); the live wire includes a live wire core (21), and a first insulation layer (22) of the live wire, a shielding layer (23) of the live wire and a second insulation layer (24) of the live wire which are successively sheathed outside the live wire core (21); the neutral wire comprises a neutral wire core (31), and a first insulation layer (32) of the neutral wire, a shielding layer (33) of the neutral wire and a second insulation layer (34) of the neutral wire which are successively outside the neutral wire core (31); and the ground wire comprises a ground wire core (41) and an insulation layer (42) of the ground wire sheathed outside the ground wire core (41).

2. The power cord capable of being detected by leakage protector when leakage occurs according to claim 1, wherein the live wire core (21), the neutral wire core (31) and the ground wire core (41) are all copper conductor wire core.

3. The power cord capable of being detected by leakage protector when leakage occurs according to claim 1, wherein the shielding layer (23) of the live wire and the shielding layer (33) of the neutral wire are both metal mesh woven layers.

4. The power cord capable of being detected by leakage protector when leakage occurs according to claim 3, wherein the metal mesh woven layer is a copper mesh woven layer, a copper mesh aluminum foil woven layer or a copper aluminum mesh woven layer.

5. The power cord capable of being detected by leakage protector when leakage occurs according to claim 1, wherein the first insulation layer (22) of the live wire, the second insulation layer (24) of the live wire, the first insulation layer (32) of the neutral wire, the second insulation layer (34) of the neutral wire and the insulation layer (42) of the ground wire are a polyvinyl chloride insulation layer, a polyethylene insulation layer or a cross-linked polyethylene insulation layer.

6. The power cord capable of being detected by leakage protector when leakage occurs according to claim 1, wherein the outer coating layer (1) is a polyvinyl chloride outer coating layer, a polyethylene outer coating layer or a poly perfluoro ethylene propylene outer coating.
